# EUROPÄISCHE PATENTSCHRIFT

(11) **EP 0 595 825 B1**
(45) Veröffentlichungstag und Bekanntmachung des Hinweises auf die Patenterteilung: **06.03.1996**
(21) Anmeldenummer: 92911674.7
(22) Anmeldetag: 17.06.1992
(51) Int. Cl.: G06F 1/32, B60R 16/02

(54) **VERFAHREN ZUM BETREIBEN EINES MIKROPROZESSORS**
METHOD OF OPERATING A MICROPROCESSOR
PROCEDE POUR LE FONCTIONNEMENT D'UN MICROPROCESSEUR

(30) Priorität: 18.07.1991 DE 4123811
(43) Veröffentlichungstag der Anmeldung: 11.05.1994
(73) Patentinhaber: ROBERT BOSCH GMBH, D-70442 Stuttgart (DE)
(72) Erfinder: KENTRAT, Thomas, D-7595 Sasbachwalden (DE); WALTER, Helmut, D-7573 Sinzheim (DE); VOEHRINGER, Klaus, D-7502 Malsch (DE); PRUESSEL, Holger, D-7582 Buehlertal (DE)
(86) Internationale Anmeldenummer: DE9200495
(87) Internationale Veröffentlichungsnummer: WO9302408

(56) Entgegenhaltungen:
- WO-A-91/02303
- US-A- 4 734 871

## Beschreibung

### Stand der Technik

Die Erfindung geht aus von einem Verfahren zum Betreiben eines Mikroprozessors nach der Gattung des unabhängigen Anspruchs. Aus der US-A 4 734 871 ist ein gattungsgemäßes Verfahren zum Betreiben eines Mikroprozessors bekannt, der von einem inaktiven in einen aktiven Zustand versetzt werden kann. Die vorbekannte Schaltung enthält eine Zeitgeberschaltung zur Vorgabe der inaktiven Zeit. In der Zeitgeberschaltung ist ein Transistor vorgesehen, der von einem Ausgang des Mikroprozessors ein- und abgeschaltet wird. Der Transistor verbindet einen im Zeitgeber enthaltenen Kondensator mit einem Ladewiderstand. Der Transistor reduziert durch den unvermeidlichen Spannungsabfall zwischen Emitter- und Collectoranschluß die am Kondensator erreichbare Spannung. Parallel zum Kondensator liegt ein Entladewiderstand, der bei eingeschaltetem externen Transistor mit dem Ladewiderstand einen Spannungsteiler bildet, der nochmals die am Kondensator maximal erreichbare Spannung während des aktiven Zustands des Mikroprozessors reduziert. Der Entladewiderstand muß daher, zumindest im Vergleich zum Wert des Ladewiderstands, einen vergleichsweise hohen Wert aufweisen, so daß eine freie Festlegung der Entladezeit nicht möglich ist.

Der Erfindung liegt die Aufgabe zugrunde, ein Verfahren zum Betreiben eines Mikroprozessors anzugeben, der durch ein Signal an einem Eingang von einem inaktiven in einen aktiven Betriebszustand schaltbar ist, das eine in weiten Grenzen wahlfreie Festlegung der Ladezeit und der Entladezeit ermöglicht.

Die Aufgabe wird durch die im einzigen Patentanspruch angegebenen Merkmale gelöst.

### Vorteile der Erfindung

Das erfindungsgemäße Verfahren weist den Vorteil einer besonders einfachen Durchführung auf, wobei nur wenige Bauteile erforderlich sind.

Erfindungsgemäß ist vorgesehen, daß sowohl der Ladewiderstand als auch der Entladewiderstand mit getrennten Anschlüssen des Mikroprozessors verbunden sind. Während des aktiven Zustands des Mikroprozessors wird der im Zeitgeber enthaltene Kondensator über den als Ausgang geschalteten Anschluß und über den Ladewiderstand mit einem vom Mikroprozessorausgang zur Verfügung gestellten Ladestrom geladen. Beim Eintritt in den inaktiven Zustand des Mikroprozessors wird der andere Anschluß als Eingang geschaltet und der Kondensator über den Entladewiderstand mit einem in den Mikroprozessor fließenden Entladestrom entladen.

Die erfindungsgemäßen Maßnahmen ermöglichen eine rasche Aufladung des Kondensators während des aktiven Betriebs des Mikroprozessors und insbesondere eine wahlfreie Festlegung der Entladezeit während des inaktiven Betriebs. Es ist somit möglich, den aktiven Zustand im Vergleich zu dem inaktiven Zustand kurz zu halten. Die Ladezeit sowie die Entladezeit hängen von dem Kapazitätswert des Kondensators, von der Betriebsspannung sowie von den in weiten Grenzen frei wählbaren Widerstandswerten des Entlade- und Ladewiderstands ab.

### Zeichnung

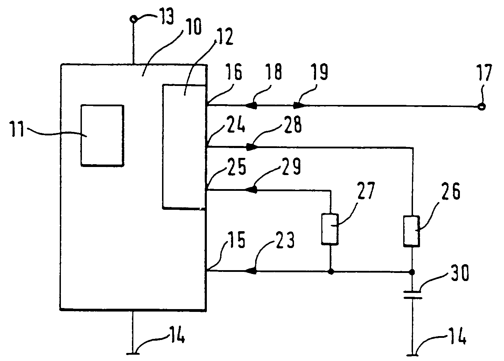

Die Figur zeigt ein Blockschaltbild, das einen Mikroprozessor enthält, auf den das erfindungsgemäße Verfahren angewendet wird.

Die Figur zeigt einen Mikroprozessor 10, der einen Programmspeicher 11 und ein Eingangs-/Ausgangsteil 12 enthält. Der Mikroprozessor 10 weist weiterhin Anschlüsse 13, 14 für eine Stromversorgung sowie einen Anschluß 15 für einen Interrupteingang auf.

Das Eingangs-/Ausgangsteil 12 enthält einen Anschluß 16, der mit einem externen Anschluß 17 verbunden ist. Über den externen Anschluß 17 sind sowohl Eingangssignale 18 als auch vom Mikroprozessor 10 kommende Ausgangssignale 19 geführt.

Das Eingangs-/Ausgangsteil 12 gibt über einen weiteren Anschluß 24 ein Ausgangssignal 28 an einen Zeitgeber ab, der seinerseits ein Ausgangssignal 23 an den Interruptanschluß 15 abgibt. Der Zeitgeber ist zumindest an einem der Stromversorgungsanschlüsse 13, 14 angeschlossen.

Das Eingangs-/Ausgangsteil 12 enthält einen weiteren Anschluß 25, dem ein Eingangssignal 29 zugeführt ist. An den zwei Anschlüssen 24, 25, sind jeweils ohmsche Widerstände 26, 27 angeschlossen. Die Widerstände 26, 27 sind an einen Kondensator 30 geschaltet, der mit dem Stromversorgungsanschluß 14 verbunden ist. Der Interruptanschluß 15 ist am Kondensator 30 angeschlossen.

Das erfindungsgemäße Verfahren wird anhand des in der Figur gezeigten Blockschaltbildes näher erläutert:

Der in der Figur gezeigte Mikroprozessor 10 ist eine programmgesteuerte signalverarbeitende Anordnung, die beispielsweise den Programmspeicher 11 integriert enthält. Das Eingangs-/Ausgangstei 12 enthält Anschlüsse 16, 24, 25, die in Abhängigkeit von dem Programm als Eingänge oder Ausgänge schaltbar sind. Der mit dem externen Anschluß 17 verbundene Anschluß 16 kann beispielsweise sowohl Eingangssignale aufnehmen als auch Ausgangssignale 19 abgeben. In Abhängigkeit von der Anwendung des Mikroprozessors 10 kann es vorkommen, daß der Mikroprozessor 10 nicht ständig im aktiven Betriebszustand gehalten werden muß. Einige Typen von Mikroprozessoren 10, beispielsweise ein MC 68 HC 04 P3 des Herstellers Motorola Inc., verfügen über die Möglichkeit, einen ruheenergiesparenden inaktiven Betriebszustand einnehmen zu können. Der Übergang in den inaktiven Zustand ist beispielsweise durch das im Programmspeicher 11 enthaltene Programm steuerbar. Weiterhin ist es bei einigen Typen möglich, über einen separaten Eingang den inaktiven Betriebszustand durch ein Eingangssignal auszulösen. Der ruheenergiesparende inaktive Zustand des Mikroprozessors 10 hat insbesondere Bedeutung bei batteriebetriebenen Systemen. Eine derartige Anwendung ist beispielsweise bei Kraftfahrzeugen gegeben, die, zumindest bei abgeschalteter Brennkraftmaschine, von einer Batterie mit elektrischer Energie versorgt werden. Im abgeschalteten Zustand der Brennkraftmaschine benötigen eine gegebenenfalls vorhandene Alarmanlage oder beispielsweise eine Zentralverriegelungsanlage, die den Mikroprozessor 10 enthalten, weiterhin elektrische Energie. Eine Funktion des Mikroprozessors 10 ist in diesen Fällen jedoch nur dann erforderlich, wenn beispielsweise über den externen Anschluß 17 ein Eingangssignal 18 am Anschluß 16 des Eingangs-/Ausgangsteils 12 empfangen wird, das beispielsweise von einem Signalgeber der Zentralverriegelungsanlage abgegeben wird. Nach dem Abarbeiten eines bestimmten, im Programmspeicher 11 hinterlegten Programms, wobei die aktive Zeit beispielsweise im Mikrosekundenbereich liegen kann, kann der Mikroprozessor 10 in den inaktiven Zustand geschaltet werden, weil die anschließende Betriebspause beispielsweise im Millisekunden, Sekundenbereich oder darüber liegt. Im Stand der Technik ist deshalb der Mikroprozessor 10 über Verbindungsleitungen mit Teilsystemen verbunden, die den Mikroprozessor 10 in den aktiven Betriebszustand schalten. Bei mehreren Eingangssignalen ist beispielsweise eine ODER-Verknüpfung und gegebenenfalls jeweils eine Entkopplung der einzelnen Leitungen erforderlich. Dieser vergleichsweise hohe Aufwand, der Kosten verursacht, ist mit dem erfindungsgemäßen Verfahren vermeidbar. Erfindungsgemäß ist vorgesehen, daß bei jedem Eintritt in den inaktiven Zustand des Mikroprozessors 10 nach einer vorgebbaren Zeit dem Interruptanschluß 15 ein Aktivierungssignal zugeführt wird. Es wird hier angenommen, daß der Mikroprozessor 10 über den Interrupteingang 15 in den aktiven Betriebszustand geschaltet werden kann.

Das Eingangs-/Ausgangsteil 12 des Mikroprozessors 10 gibt während des aktiven Zustands des Mikroprozessors 10 über den Anschluß 24 als Ausgangssignal 28 einen Ladestrom über den Widerstand 26 an den Kondensator 30 ab. Der Kondensator 30 wird auf ein Potential geladen, das beispielsweise gleich dem Potential ist, das am Stromversorgungsanschluß 13 des Mikroprozessors 10 auftritt. Die Ladedauer wird durch den Wert des Widerstands 26, den Strom sowie die Kapazität des Kondensators 30 festgelegt. Beim Eintritt in den inaktiven Zustand wird der Anschluß 25 als Eingang geschaltet und der Kondensator 30 über den Widerstand 27 entladen. Die Verwendung eines vom Ladewiderstand 26 getrennten Entladewiderstands 27 weist den besonderen Vorteil auf, daß die Lade- und Entladezeit unabhängig voneinander vorgebbar sind. Es ist somit möglich, nach einer vergleichsweise kurzen Dauer des aktiven Zustands den Kondensator 30 zu laden und während des inaktiven Zustands vergleichsweise langsam zu entladen. Die Lade- und Entladeströme sind hauptsächlich durch die Widerstände 26, 27 in Verbindung mit der Betriebsspannung festgelegt.

## Patentansprüche

1. Verfahren zum Betreiben eines Mikroprozessors (10), der durch ein Aktivierungssignal (23) an einem Eingang (15) von einem inaktiven in einen aktiven Betriebszustand schaltbar ist, bei dem das Aktivierungssignal (23) an einem Kondensator (30), der an einem Stromversorgungsanschluß (14) angeschlossen ist, abgegriffen wird, wobei der Kondensator Teil eines Zeitgebers ist, der weiterhin einen Ladewiderstand (26) und einen Entladewiderstand (27) enthält, dadurch gekennzeichnet, daß der Ladewiderstand (26) und der Entladewiderstand (27) mit Anschlüssen (24, 25) des Mikroprozessors (10) verbunden sind, die Bestandteile des Eingangs-/Ausgangsteils (12) des Mikroprozessors (10) sind, daß über den Anschluß (24) ein Ladestrom als Ausgangssignal (28) über den Ladewiderstand (26) an den Kondensator (30) abgegeben wird, daß dem Anschluß (25) ein Entladestrom als Eingangssignal (29) vom Kondensator (30) über den Entladewiderstand (27) zugeführt wird, daß während des aktiven Zustands des Mikroprozessors (10) der Kondensator (30) über den als Ausgang geschalteten Anschluß (24) und über den Ladewiderstand (26) mit dem Ladestrom (28) geladen wird und daß beim Eintritt in den inaktiven Zustand des Mikroprozessors (10) der Anschluß (25) als Eingang geschaltet und der Kondensator (30) über den Entladewiderstand (27) mit dem Entladestrom (29) entladen wird.

## Claims

1. Method of operating a microprocessor (10) which can be switched from an inactive into an active operating state by an activation signal (23) at an input (15), in which method the activation signal (23) is picked off at a capacitor (30) connected to a power supply connection (14), the capacitor being part of a timer which further contains a charging resistor (26) and a discharge resistor (26), characterized in that the charging resistor (26) and the discharge resistor (27) are connected to connections (24, 25) of the microprocessor (10) which are parts of the input/output section (12) of the microprocessor (10), in that a charging current is emitted via the connection (24) as an output signal (28) via the charging resistor (26) to the capacitor (30), in that a discharge current is fed to the connection (25) as an input signal (29) from the capacitor (30) via the discharge resistor (27), in that, during the active state of the microprocessor (10), the capacitor (30) is charged by the charging current (28) via the connection (24), which is connected as output, and via the charging resistor (26), and in that when the microprocessor (10) enters the inactive state, the connection (25) is connected as input and the capacitor (30) is discharged by the discharge current (29) via the discharge resistor (27).

## Revendications

1. Procédé de mise en oeuvre d'un microprocesseur (10) qu'un signal d'activation (23) appliqué à une entrée (15) commute d'un état inactif à un état actif, selon lequel le signal d'activation (23) est relié à un condensateur (30) lui-même relié à une borne d'alimentation en courant (14), le condensateur faisant partie d'une horloge comprenant en outre une résistance de charge (26) et une résistance de décharge (27), procédé caractérisé en ce que la résistance de charge (26) et la résistance de décharge (27) sont reliées aux bornes (24, 25) du microprocesseur (10) appartenant à la partie entrée/sortie (12) du microprocesseur (10) et par la borne (24) un courant de charge est fourni comme signal de sortie (28) à travers la résistance de charge (26) au condensateur (30), et la borne (25) reçoit un courant de décharge comme signal d'entrée (29) du condensateur (30) à travers la résistance de décharge (27) et pendant l'état actif du microprocesseur (10), le condensateur (30) est chargé à travers la borne (24) commutant comme sortie et à travers la résistance de charge (26) avec le courant de charge (28), et au passage à l'état inactif du microprocesseur (10), la borne (25) est commutée comme entrée et le condensateur (30) est déchargé par le courant de décharge (29) à travers la résistance de décharge (27).
